# EUROPEAN PATENT APPLICATION

(11) **EP 3 279 714 A1**
(43) Date of publication of application: **07.02.2018**
(21) Application number: 17184636.3
(22) Date of filing: 03.08.2017
(51) Int. Cl.: G02B 25/00, G02C 7/08

(54) **LOUPE WITH MAGNETICALLY INTERCHANGEABLE TELESCOPES**

(30) Priority: 03.08.2016 US 201662370616 P; 25.07.2017 US 201715658691
(71) Applicant: Kerr Corporation, Orange, CA 92867 (US)
(72) Inventor: LINDSEY, Thomas, Orange, CA California 92867 (US); ONDERAK, James, Orange, CA California 92867 (US); OREN, Matthew, Orange, CA California 92867 (US)
(74) Representative: Korenberg, Alexander Tal

(57) **Abstract**

Loupes with magnetically interchangeable telescopes. Each loupe may include an anchor assembly and a telescope assembly. Either assembly may include a magnet. The other assembly may include a magnetic element. The telescope assembly may be releasably adjoined to the anchor assembly by magnetic attraction. The magnetic attraction may include magnetic interaction between the magnet and the magnetic element. Geometrical shape and magnetic properties of each of the magnet and the magnetic element, and placement of each within its assembly, may be set for maintaining releasable adjoinment of the assemblies. The loupe may provide a magnified view of a visual field, such as a clinical setting. The telescope assembly may be interchangeable in the loupe for another telescope assembly. The interchangeable telescope assemblies may provide different magnifications of the field. Loupes may be paired for binocular magnified viewing of the field.

## Description

### CROSS-REFERENCE TO RELATED APPLICATIONS

This application claims the benefit of U.S. Provisional Application No. 62/370,616, filed on August 3, 2016, which is hereby incorporated by reference herein in its entirety.

### FIELD OF TECHNOLOGY

Aspects of the disclosure relate generally to optical devices. More specifically, the disclosure relates to wearable visual aids, particularly loupes.

### BACKGROUND

Loupe devices are essential components of hands-on precision work of dentistry and surgery, as well as of other areas where high resolution visual information is desirable (e.g., biology, electronics assembly and inspection, gemology, tool sharpening, photography). Dentists, surgeons and other professionals often employ the use of binocular loupes mounted on glasses; for example, embedded directly in specialized carrier lenses, or as flip-up devices mountable on glasses frames (or on visors, with/without an associated headlamp; etc.). Loupes enable these healthcare professionals and others to free their hands to perform a precision-requiring procedure while simultaneously being provided a magnified view of a visual field of the procedure's setting. Loupes can also improve a healthcare practitioner's posture, which, in turn, can decrease his/her occupational strain (see, e.g., Friedman, Mark J. "Magnification in a restorative dental practice: from loupes to microscopes" Compendium of Continuing Education in Dentistry - Jamesburg, NJ: 1995 25(1) 48, 50, 53-55*).*

Such a medical, dental or other professional may require different magnifications for different procedures or for different stages of procedures. The professional may also require and/or desire increasing magnification as his/her career progresses over time. Along these lines, while a typical dental procedure may be served by a magnification of 2.5x, in practice, dental loupes generally range anywhere from 2x to 8x magnification.

Currently, there are limited options available to the professional seeking multiple magnification levels. One option, the acquisition of multiple loupes at different magnification levels (together with their dedicated mounting devices), can be prohibitively expensive. The dentist, surgeon or other professional may instead opt for purchasing a loupe with variable magnification capabilities, but such loupes generally have a weight disadvantage that is not easily overcome in a practical manner.

### SUMMARY

The present invention embodies solutions to these problems. Accordingly, it is an object of this invention to provide apparatus and methods for accommodating multiple magnification levels in an optical device that is comfortable, practical and easy to use. The apparatus may feature, and the methods may involve, one or more than one loupe anchor assembly and one or more than one loupe telescope assembly that are adjoined by magnetic attraction between the anchor assembly and telescope assembly. With the magnetic attraction facilitating both engaging of the telescope assembly to the anchor assembly and ease of release of the telescope assembly from the anchor assembly, telescopes of differing magnifications may be readily interchanged, even during the course of a procedure. A loupe with interchangeable telescopes may provide the dentist, surgeon or other professional with a range of multiple magnifications without requiring a set of multiple dedicated loupes. Pairs of anchor assemblies may be mechanically associated with glasses, visors, flip-ups, etc. in binocular orientations. Adjoinment of pairs of telescopes assemblies to a pair of binocularly oriented anchor assemblies may provide the dentist, surgeon or other professional with a magnified three-dimensional view of the setting of a precision-requiring procedure.

### BRIEF DESCRIPTION OF THE DRAWINGS

The objects and advantages of the invention will be apparent upon consideration of the following detailed description, taken in conjunction with the accompanying line drawings, in which like reference characters refer to like parts throughout, and in which:
FIG. 1 is a perspective view of apparatus in accordance with the principles of the invention;
FIG. 2 is a perspective view of apparatus in accordance with the principles of the invention;
FIG. 3a is an exploded perspective view of apparatus in accordance with the principles of the invention;
FIG. 3b is a partial cross-sectional view of the apparatus shown in FIG. 3a, in an assembled state; and
FIG. 4 is a flow diagram of an illustrative process in accordance with the principles of the invention.

### DETAILED DESCRIPTION OF THE DISCLOSURE

Apparatus and methods for accommodating multiple magnification levels in an optical device, such as a loupe, are provided. The apparatus may include, and the methods may involve, assemblies releasably adjoined by magnetic attraction. The apparatus may include, and the methods may involve, one or more than one loupe anchor assembly and one or more than one loupe telescope assembly, with magnetic attraction therebetween maintaining releasable adjoinment of the assemblies of the loupe.

In some embodiments, one or more than one magnet may be affixed to the anchor assembly and one or more than one magnetic element may be affixed to the telescope assembly. In some embodiments, the magnetic element(s) may be affixed to the anchor assembly and the magnet (s) may be affixed to the telescope assembly. In some embodiments, the magnet(s) and the magnetic element(s) may be provided on both the anchor assembly and the telescope assembly. In some embodiments, the magnet(s) may be provided on both the anchor assembly and the telescope assembly, with magnetic poles of the magnets on the adjoined assemblies oriented such that the magnet(s) of one assembly is attracted to the magnet(s) of other assembly.

The magnet (s) may include material (s) suitable to provide a magnetic field strength sufficient to secure the telescope assembly to the anchor assembly in a dependable manner, maintaining releasable adjoinment of the assemblies. The materials(s) may include magnetic alloy(s) such as those that include iron, cobalt and/or nickel. The magnet(s) may include lodestone, rare earth metal or any suitable magnetic substance. Any suitable magnetic substance may include rare-earth-free permanent magnet(s). Any suitable magnetic substance may include nano-structured magnet(s).

The magnet(s) may be of shapes providing a magnetic field of sufficient strength to magnetically attract a corresponding magnetic element(s) on a complementary assembly to maintain releasable adjoinment of the assemblies. To ensure magnetic attraction sufficient for the telescope assembly to remain reliably adjoined to the anchor assembly, a geometry of the magnet(s) may include an elongated cylindrical shape. A magnetic field associated with the elongated cylindrical shape may extend sufficiently outward from a cylindrical end of the magnet to ensure a reliably strong magnetic interaction between the assemblies. The magnet (s) may be of any shape that provides the reliably strong magnetic interaction between the assemblies. The reliably strong magnetic interaction may be sufficient to ensure releasable adjoinment of the assemblies even when the magnet(s) and the magnetic element(s) are not aligned and/or not flush or not abutting.

The magnetic element(s) may include any substance suitable to be attracted by the magnet(s). Any suitable magnetic element substance may include iron, cobalt, nickel or any of their alloys. The magnetic element(s) may provide their own magnetic field(s). A shape of the magnetic element(s) may include a ring. The ring may be disposed transverse to, and radially non-occluding of, a line of sight through the adjoined assemblies. The magnetic element(s) may be of any geometry and/or shape suitable to facilitate attraction between the magnetic element(s) and the magnet(s) and to remain non-occluding of the line of sight.

In some embodiments, the anchor assembly and/or the telescope assembly may be fabricated at least partly of material of sufficient magnetic character to be attracted to the magnet(s) of the complementary assembly, without the need for a magnetic element. A structural wall or other structural component of the telescope assembly and/or of the anchor assembly may include material of the sufficient magnetic character.

The magnet(s) may be disposed exteriorly of or interiorly to the telescope assembly and/or the anchor assembly. The magnet(s) may be inserted in or on the telescope assembly and/or the anchor assembly. The magnet(s) may be inserted in or on an end of the telescope assembly and/or of the anchor assembly. The magnet(s) may protrude beyond the end; be flush with the end; or be recessed away from the end. The magnet(s) may be disposed in recesses in a component of the anchor assembly, such as in an anchor body. The magnet (s) may be disposed in bores in the anchor body. The magnet(s) may be disposed in recesses in the telescope assembly. The magnet(s) may be disposed in bores in the telescope assembly. The magnet(s) may be affixed via internal or external screw threads or by any other suitable fixation mechanism. The magnet(s) may be retained within the anchor body by an anchor cover affixed to the anchor body. The magnet(s) may be disposed in recesses in the anchor cover. The magnet (s) may be disposed in bores in the anchor cover.

The magnetic element(s) may be disposed exteriorly of or interiorly to the telescope assembly and/or the anchor assembly. The magnetic element(s) may be inserted in or on the telescope assembly and/or the anchor assembly. The magnetic element (s) may be inserted in or on an end of the telescope assembly and/or the anchor assembly. The magnetic element (s) may protrude beyond the end; be flush with the end; or be recessed away from the end. The magnetic element (s) may be disposed in recesses in a component of the anchor assembly, such as in the anchor body. The magnetic element(s) may be disposed in bores in the anchor body. The magnetic element(s) may be disposed in recesses in the telescope assembly. The magnetic element(s) may be disposed in bores in the telescope assembly. The magnetic element(s) may be affixed via internal or external screw threads or by any other suitable fixation mechanism. The magnetic element (s) may be retained within the anchor body by the anchor cover affixed to the anchor body. The magnetic element(s) may be disposed in recesses in the anchor cover. The magnetic element(s) may be disposed in bores in the anchor cover.

There may be geometrically complementary mechanical engagement structures on the anchor assembly and on the telescope assembly. The mechanical engagement structures on the anchor assembly and on the telescope assembly may couple together, supplementing the magnetic attraction between the assemblies in maintaining the adjoinment. These structures may include protrusions, notches, grooves, latches, screw threads, hooks, eyes, holes, pegs, hook-and-loop fasteners or any other suitable mechanical system of engagement.

The magnet(s), magnetic element(s) and/or mechanical engagement structure(s) may be disposed on the anchor assembly and/or on the telescope assembly in a fashion providing a specific rotational orientation (such as along the line of sight) between the anchor assembly and the adjoined telescope assembly. Alternatively or additionally, the magnet(s), magnetic element(s) and/or mechanical engagement structure(s) may be disposed on the anchor assembly and/or on the telescope assembly in a fashion allowing selection among multiple rotational orientations.

The magnet(s) and magnetic element(s) may be positioned in the telescope assembly and/or the anchor assembly such that at least a portion of aligned magnet(s) and magnetic element (s) may abut and/or be flush with each other when the assemblies are adjoined. Alternatively or additionally, the magnet(s) and the magnetic element(s) may not be aligned or not be flush or not be abut, but may still be configured to be disposed within range of each other such that there may be sufficient magnetic attraction between the magnet(s) and the magnetic element(s) to reliably hold the assemblies together.

The magnet(s) and/or the magnetic element(s) may be fastened to the anchor assemblies and/or to the telescope assemblies with one or more than one suitable fastener (s) or fastening mechanism(s). In some embodiments, one or more than one threaded screw may extend through aligned holes of both the anchor body and the anchor cover, thereby sandwiching the magnet(s) in place between the anchor body and anchor cover. One or more than one recess or bore in the anchor body and/or anchor cover may be configured to hold the magnet(s) in place. The recess(es) and/or bore(s) may be internally contoured complementarily to an external geometry of the magnet. The magnet (s) may be secured in aligned recess (es) and/or bore(s) in both the anchor body and the anchor cover.

The magnet(s) and/or magnetic element(s) may be affixed by adhesive or snapped/press-fit in place within the recess (es) and/or bore(s). There may also be one or more than one lip, ridge, groove, rim, abutment surface, screw thread, hook, latch or any other suitable fastening means holding and/or orienting the magnet(s) and/or magnetic element(s) in their respective assemblies.

The telescope assembly may include a telescope having one or more than one magnification lens. The telescope assembly may define an interior. The magnification lens(es) may be disposed in the telescope assembly interior. The magnification lens(es) may be fixedly disposed relative to the line of sight. The magnification lens(es) may be adjustably disposed relative to the line of sight.

The anchor assembly may include one or more than one corrective lens. The corrective lens(es) may be configured to meet a visual need of the professional. Any suitable fastening mechanism may fasten the corrective lens(es) to the anchor assembly. One or more than one retaining ring pressing upon a periphery of one lenticular face of one of the corrective lens(es) may force a periphery of the opposite lenticular face toward and against interiorly protruding surface(s) of the anchor assembly. The retraining ring may be secured to the anchor cover. The interiorly protruding surfaces may be a feature of the anchor body. The anchor cover may be fastened to the anchor body, retaining the corrective lens in place between the anchor body's interiorly protruding surfaces and the retaining ring.

The corrective lens(es) may be fastened with adhesive or snapped/press-fit in place. There may be one or more than one lip, ridge, rim, surface or any other suitable fastening means holding and/or orienting the corrective lens(es). The corrective lens(es) may be held in place in a specific orientation relative to the line of sight. The corrective lens(es) may be held in a fashion allowing selection among multiple orientations. Some embodiments may not feature the corrective lens(es). Some embodiments may feature "window-glass" lenses that do not correct vision.

An end of the anchor assembly may be configured to receive an end of the telescope assembly. An end of the telescope assembly may be configured to receive an end of the anchor assembly. The one assembly may define an interior hollow configured to receive the other assembly. The one assembly may be configured to receive the other assembly interiorly. The one assembly may be configured to receive the other assembly exteriorly. The one assembly receiving the other assembly may bring the magnet(s) and/or magnetic element(s) of the assemblies within sufficient range of each other for there to be sufficient magnetic attraction between the magnet(s) and magnetic element(s) to releasably adjoin the assemblies.

There may be additional mechanical features supplementing the magnetic attraction to maintain the interchangeable telescope assemblies adjoined to the anchor assemblies. There may not be additional mechanical features supplementing the magnetic attraction to maintain the interchangeable telescope assemblies adjoined to the anchor assemblies.

In some embodiments, a pair of the anchor assemblies may be embedded in a pair of carrier lenses carried by a carrier frame, such as a glasses frame, altogether comprising a binocular anchor apparatus to which telescope assemblies may be adjoined. One of the pair of anchor assemblies may be affixed to one of the pair of carrier lenses, and an other of the pair of anchor assemblies may be affixed to an other of the pair of carrier lenses. In some embodiments, the pair of anchor assemblies may be affixed to a flip-up, hinged device attached to the upper edge of a glasses frame. Alternatively, a monocular device may be implemented (e.g. for a jeweler's inspection of a gem), with the anchor body placed directly adjacent the eye, and using neither a carrier frame nor carrier lenses.

In some embodiments, the telescope assembly may be of a monolithic construction. The monolithic construction may accommodate the magnification lens(es). The monolithic construction may accommodate the magnet(s) and/or the magnetic element(s). The monolithic construction may include the magnet(s) and/or the magnetic element(s).

In some embodiments, the anchor assembly may be of a monolithic construction. The monolithic construction may combine structures and/or functions of the anchor body, the anchor cover, the retaining ring and/or the fastener(s). The monolithic construction may accommodate the corrective lens(es). The monolithic construction may accommodate the magnet(s) and/or the magnetic element(s). The monolithic construction may include the magnet(s) and/or the magnetic element(s).

The apparatus may involve, and the methods may include, a method of manufacture of a loupe device in accordance with the principles of the invention. Some steps of the method may be performed by one person, while other steps may be performed by more than one person. For simplicity of presentation, the steps of the method are presented performed by a "fabricator," such as a manufacturer.

The method of manufacture may include the fabricator inserting, attaching, bonding and/or affixing the magnet(s) and/or the magnetic element(s) into, onto and/or about the anchor body and/or the telescope.

The fabricator may align the anchor cover to the anchor body. The fabricator may affix the anchor cover to the anchor body. The fabricator may insert the fastener(s) into and/or through the anchor body and the anchor cover, thereby retaining the magnet(s) and/or the magnetic element(s) between the anchor cover and the anchor body.

The fabricator may align a telescope cover to the telescope. The fabricator may affix the telescope cover to the telescope. The fabricator may insert fastener(s) into and/or through the telescope and the telescope cover, thereby retaining the magnet(s) and/or the magnetic element(s) between the telescope cover and the telescope.

The fabricator may produce a fixed mechanical association between the magnetic element(s) and the magnification lens(es). The association may be direct, such as where the magnetic element(s) fixedly and/or directly contacts the magnification lens. The association may be indirect, such as where one or more than one telescope part is disposed between the magnification lens(es) and the magnetic element (s) . The magnetic element (s) may include parts of magnetic wall(s) of the telescope.

The fabricator may mechanically associate the magnetic element(s) with the magnification lens(es). The fabricator may fixedly mechanically associate the magnetic element(s) with the magnification lens(es). The fabricator may fixedly mechanically associate the magnetic element(s) with the magnification lens(es) such that proximity of the magnet to the magnetic element effects magnetic interaction between the magnet and the magnetic element. The magnetic interaction may releasably mechanically associate the magnification lens with the anchor body. The fabricator may fixedly mechanically associate the magnetic element(s) with the magnification lens(es) such that bringing the magnetic element(s) into the proximity of the magnet(s) effecting the magnetic interaction between the magnet(s) and the magnetic element(s), releasably adjoins the magnification lens(es) with the anchor body. The fabricator may bring the mechanically fixed magnetic element into the proximity.

The fabricator may affix the magnetic element to a telescope that includes the magnification lens(es). The fabricator may manufacture one or more than one part of the telescope of one or more than one material with magnetic properties, the telescope including the magnification lens(es).

The method of manufacture may include the fabricator disposing, inserting and/or affixing the corrective lens within the anchor cover and/or the anchor body. The method of manufacture may include the fabricator disposing, inserting and/or affixing the magnification lens(es) within the telescope cover and/or the telescope. The method of manufacture may include the fabricator disposing, inserting and/or affixing the magnification lens(es) and/or the corrective lens(es) in, on, about and/or adjacent the magnetic element(s). The fabricator may affix the retaining ring(s) (e.g., by screw threads) to the anchor cover, thereby maintaining the corrective lens within the anchor cover and/or the anchor body. The fabricator may affix the retaining ring(s) (e.g., by screw threads) to the telescope cover and/or the telescope, thereby maintaining the magnification lens(es) within the telescope cover and/or the telescope.

Apparatus and methods described herein are illustrative. Apparatus and methods in accordance with the principles of the invention will be described in connection with the accompanying drawings in the FIGs., which form a part hereof. The FIGs. show illustrative features of apparatus and/or method steps in accordance with the principles of the invention.

The steps of the methods may be performed in an order other than the order shown and/or described herein. Some embodiments may omit steps shown and/or described in connection with the illustrative methods. Some embodiments may include steps that are neither shown nor described in connection with the illustrative methods. Illustrative method steps may be combined. For example, one illustrative method may include steps shown in connection with another illustrative method.

Some apparatus may omit features shown and/or described in connection with illustrative apparatus. Some embodiments may include features that are neither shown nor described in connection with the illustrative methods. Features of illustrative apparatus may be combined. For example, one illustrative embodiment may include features shown in connection with another illustrative embodiment.

Apparatus may involve some or all of the features of the illustrative apparatus and/or some or all of the steps of the illustrative methods. Methods may involve some or all of the features of the illustrative methods and/or some or all of the steps of the illustrative apparatus.

The apparatus and methods of the invention will be described in connection with embodiments and features of illustrative devices. The devices will be described with reference to the accompanying drawings in the FIGs. It is to be understood that other embodiments may be utilized and that structural, functional and procedural modifications may be made without departing from the scope of the present invention.

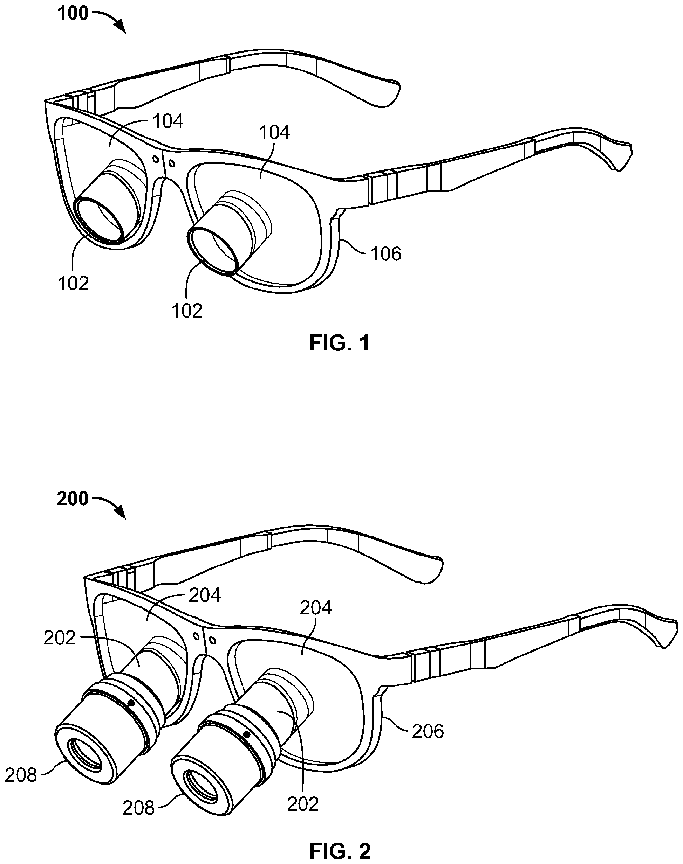

FIG. 1 shows unassembled through-the-lens binocular apparatus 100. Apparatus 100 may include loupe anchor assemblies 102. Anchor assemblies 102 may be embedded in carrier lenses 104 that are, in turn, carried by carrier frame 106. Anchor assemblies 102 may be embedded in carrier lenses 104 using an adhesive or other means of fixation (not shown). Alternatively, anchor assemblies 102 may be affixed to a carrier such as a visor or a flip-up device (not shown). The flip-up device may be attached to an upper edge of a glasses frame that may be similar to carrier frame 106.

FIG. 2 shows assembled through-the-lens binocular apparatus 200. Apparatus 200 may have one or more features in common with apparatus 100 (shown in FIG. 1).

Apparatus 200 is shown with loupe anchor assemblies 202 embedded in carrier lenses 204 that are, in turn, carried by carrier frame 206. Loupe telescope assemblies 208 may be adjoined to anchor assemblies 202. Telescopes assemblies 208 may be oriented by anchor assemblies 202 to provide a magnified binocular view of a setting, such as of a clinical operating field. Different pairs of telescope assemblies 208, the pairs differing from each other in optical or other properties, may be accommodated by apparatus 200. The pairs of telescopes may be readily interchangeable.

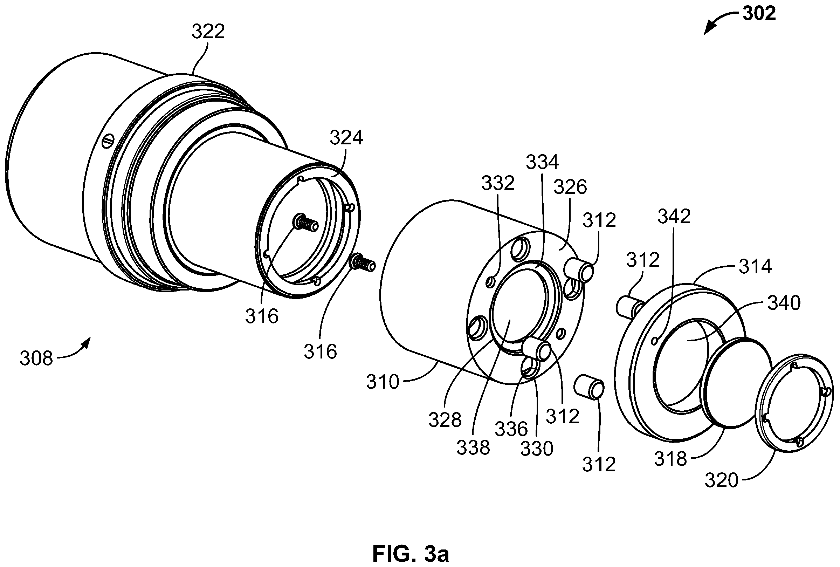

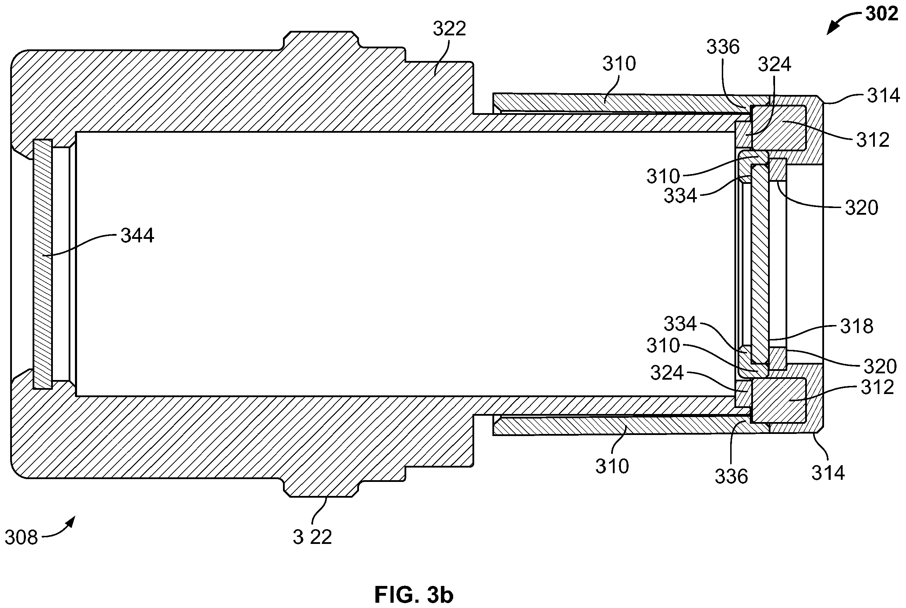

FIGs. 3a and 3b each shows loupe anchor assembly 302 and interchangeable loupe telescope assembly 308. Anchor assembly 302 may have one or more features in common with anchor assemblies 102 (shown in FIG. 1) and 202 (shown in FIG.2). Telescope assembly 308 may have one or more features in common with telescope assemblies 208 (shown in FIG.2). In operation, telescope assembly 308 may be adjoined to anchor assembly 302, with adjoined assemblies affixed in a carrier frame (such as frame 106 (shown in FIG. 1) or frame 206 (shown in FIG. 2)) or another type of carrier device, such as a visor or flip-up device (not shown).

FIG. 3a shows telescope assembly 308 unadjoined to anchor assembly 302, the latter shown in an unassembled state. FIG. 3b shows, in cross-section, telescope assembly 308 adjoined to anchor assembly 302, the latter shown in an assembled state.

FIG. 3a and/or FIG. 3b shows that anchor assembly 302, may include anchor body 310; magnet(s) 312; anchor cover 314; fasteners 316 for affixing anchor cover 314 to anchor body 310, sandwiching magnets 312 between anchor body 310 and anchor cover 314; corrective lens 318; and corrective lens-retaining ring 320. Telescope assembly 308 may include magnetic element 324 and loupe telescope 322 that may include magnification lens 344. Magnetic element 324 may be affixed to telescope 322 by screw threads or other means of fixation (not shown). Telescope assembly 308 may be releasably held to anchor assembly 302 by magnetic attraction between magnet(s) 312 and magnetic element 324.

To ensure sufficiency of magnetic attraction between magnet(s) 312 and magnetic element 324 for telescope assembly 308 to remain reliably adjoined to anchor assembly 302, geometric and material properties of magnet(s) 312 and magnetic element 324 and their placement within the assemblies may be set (e.g., during design and/or manufacture) to insure a reliably strong magnetic field providing a reliably strong level of magnetic attraction. As shown, magnets 312 may be shaped as elongated cylinders. The cylinders may have cylinder end-faces of lower diameter than a central portion of the cylinders. The lower diameter end-faces may form an annular ridge or chamfer in conjunction with the central cylinder portion (visible at one end of magnets 312 depicted in FIG. 3a). The cylinder end-faces may have shapes other than fully circular, such as semi-circular, notched circles or squares (not shown). Magnetic element 324 may be shaped as a ring. Use of a multiplicity of magnetic elements of various shapes (not shown) is envisioned.

Fasteners 316 may include threaded screws affixing anchor cover 314 to anchor body 310. Adhesive or other means of fixation (not shown) may be implemented.

Anchor body 310 may be rigid. Anchor body 310 may be cylindrical. Anchor body 310 may have a distal end configured to receive telescope assembly 308. Anchor body 310 may define a central hollow proximal the distal end. The hollow may be configured to receive telescope assembly 308. A proximal end of anchor body 310 may include annular lip 326. Annular lip 326 may extend interiorly into anchor body 310. Annular lip 326 may define lens-accommodating bay 328. Bay 328 may be bordered by lens-retention bay rim 334. Bay rim 334 may define window 338.

Annular lip 326 may have one or more than one through-holes 332. Through-hole(s) 332 may be threaded. Through-hole(s) 332 may be unthreaded. Through-hole (s) 332 may be disposed peripherally about a perimeter of lens-accommodating bay 328. Through-hole(s) 332 may receive fastener(s) 316. Through-hole 332 may be larger in internal diameter than an external diameter of a proximal shaft of fastener 316. Through-hole 332 may be smaller in internal diameter than an external diameter of a distal head of fastener 316.

Annular lip 326 may have one or more than one magnet-accommodating recesses 330. Recess(es) 330 may be disposed peripherally about the perimeter of lens-accommodating bay 328. Recess(es) 330 may extend distally into annular lip 326. Recess(es) 330 may be distally bordered by magnet-retention rim(s) 336. Recess(es) 330 may be distally occluded by magnet-retention rim(s) 336. Recess(es) 330 may receive magnet(s) 312. Recess(es) 330 may retain magnet(s) 312. Distal face(s) of magnet(s) 312 may abut rim(s) 336.

Rim(s) 336 may only partially distally occlude recess (es) 330. Ridge(s)/chamfers just proximal to distal face(s) of magnet(s) 312 may abut rim(s) 336. The distal face(s) of magnet(s) 312 may extend distally beyond rim 336. A proximal surface of magnetic element 324 may be even with, or protrude proximally from, a proximal edge of telescope 322. Adjoining telescope assembly 308 to anchor assembly 302, may dispose the proximal surface of magnetic element 324 in close proximity to the distal faces of magnet(s) 312. Adjoining telescope assembly 308 to anchor assembly 302, may bring distal face(s) of magnet (s) 312 into abutment with the proximal surface of magnetic element 324.

Anchor cover 314 may include a ring shape. Anchor cover 314 may define central window 340. A distal side of anchor cover 314 may define, disposed peripherally about a perimeter of central window 340, one or more than one bore (not shown in FIG 3a). The bore(s) may be oppositely oriented from recess(es) 330 of proximal annular lip 326. The bore(s) may be aligned with recess (es) 330. The bore(s) may be similar to recess(es) 330. The bores may be proximally delimited, not extending proximally through anchor cover 314. Each bore may receive a proximal face of magnet 312 opposite from the distal face received by recess 330 aligned with the bore. The bore(s) may retain magnet(s) 312. The proximal face(s) of magnet (s) 312 may abut distal bore bottom(s) within anchor cover 314.

Anchor cover 314 may define one or more than one screw hole 342. Screw hole(s) 342 may be disposed peripherally about the perimeter of central window 340. Screw hole(s) 342 may be threaded. Screw hole(s) 342 may receive fastener(s) 316 traversing through-hole(s) 332. Screw hole(s) 342 may retain fastener(s) 316. Screw hole 342 may retain a proximal end of the shaft of fastener 316. Other mechanical retention structures (not shown) may be implemented for receiving and/or retaining the proximal end of fastener 316. Retention of the end(s) of fastener(s) 316 may secure magnet(s) 312 in recess(es) 330 and in the aligned bore(s) of anchor cover 314.

Corrective lens 318 may be disposed within lens-accommodating bay 328. Corrective lens 318 may be disposed within central window 340. Corrective lens 318 may be retained between lens-retention bay rim 334 and lens-retaining ring 320. Ring 320 may be affixed within central window 340. An outer circumference of ring 320 may be threaded or otherwise affixable within anchor cover 314. An inner circumference of anchor cover 314 may be threaded or otherwise configured to receive and affix ring 320.

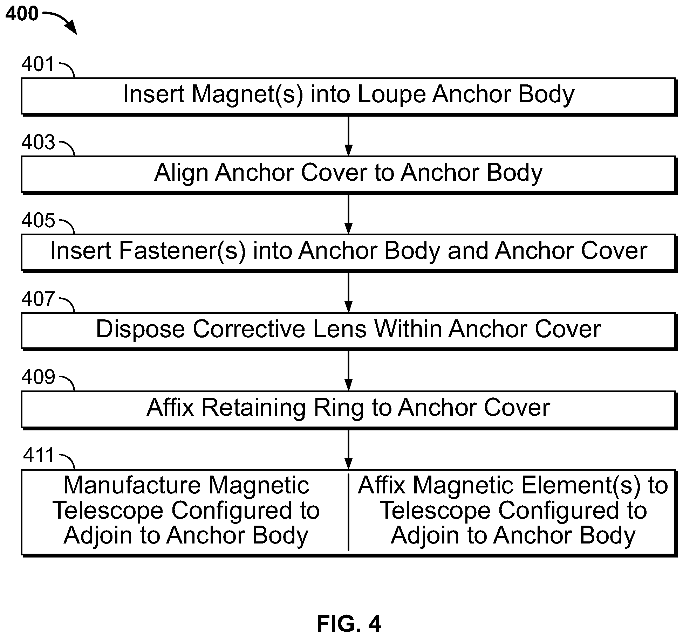

FIG. 4 shows illustrative steps of process 400. Process 400 may be a method for manufacturing a loupe device in accordance with the principles of the invention. Some steps of the process may be performed by one person, while other steps may be performed by more than one person. For simplicity of presentation, the steps of the process are presented performed by a "fabricator," such as a manufacturer.

The process may begin at step 401. At step 401, the fabricator may insert magnet(s) into an anchor body. The fabricator may insert the magnet(s) into recess(es) of the anchor body. The magnet(s) may have an elongated cylindrical shape. The elongated cylindrical magnet(s) may have a desired magnetic field shape and/or strength.

At step 403, the fabricator may align an anchor cover to the anchor body. The fabricator may align the anchor cover to the anchor body such that end(s) of the magnet(s) emerging from the recess(es) of the anchor body project into bore(s) of the anchor cover. The fabricator may align the anchor cover to the anchor body such that through-hole (s) of the anchor body align with screw hole(s) of the anchor cover.

At step 405, the fabricator may insert fastener(s) into and/or through the anchor body and the anchor cover. The fabricator may insert the fastener(s) through the through-hole(s). The fabricator may thread the fastener(s) into the screw holes. The through-holes may be internally threaded and fabricator may thread the fastener(s) through the through-holes. The fabricator may thread the fastener(s) into the anchor body. The fabricator may thread the fastener(s) into the anchor cover. The fabricator may insert one, some, or all of the fastener(s) first through the anchor body and then into the anchor cover. The fabricator may insert one, some, or all of the fastener(s) first through the anchor cover and then into the anchor body.

At step 407, the fabricator may dispose a corrective lens within the anchor cover. The fabricator may dispose the corrective lens within the anchor body. The fabricator may insert the corrective lens into a central window of the anchor cover. The fabricator may insert the corrective lens partially and/or entirely into a lens-accommodating bay of the anchor body. The fabricator may dispose the corrective lens over a window of the anchor body.

At step 409, the fabricator may affix one or more than one retaining ring to the anchor cover. The fabricator may thread the retaining ring(s) via screw threads of the retaining ring(s) into complementarily contoured screw threads of the anchor cover and/or of the anchor body. The fabricator may snap/press-fit the retaining ring(s) into/onto the anchor cover and/or the anchor body.

At step 411, the fabricator may affix, directly or indirectly, one or more than one magnification lens to one or more than one magnetic element. The fabricator may manufacture a magnetic telescope configured to adjoin to the anchor body. The magnetic element(s) may include one or more than one structural wall of the telescope. The fabricator may affix the magnification lens(es) to the wall(s), e.g., by using retaining ring(s), adhesive and/or any other suitable means of fixation. The fabricator may construct the telescope such that an end of the telescope fits in, on, about and/or adjacent an end of the anchor body. The fabricator may attach the magnetic element(s) to the telescope, e.g., by engaging screw threads of the magnetic element(s) with complementarily contoured screw threads of the telescope cover and/or the telescope. The fabricator may snap/press-fit the magnetic element(s) into/onto the telescope cover and/or the telescope. The fabricator may manufacture the telescope such that the magnetic element(s) facilitate releasable adjoinment of the telescope with the anchor body by magnetic interaction with the magnet(s).

Thus, apparatus and methods for accommodating multiple magnification levels in an optical device that is comfortable, practical and easy-to-use have been provided. Persons skilled in the art will appreciate that the present invention can be practiced by other than the described embodiments, which are presented for the purpose of illustration rather than of limitation. The present invention is limited only by the claims that follow.

Further aspects and embodiments are disclosed in the following numbered items:
1. A loupe device for magnifying an object, the device comprising:
   an anchor body including a corrective lens; and
   an interchangeable telescope;
   wherein the telescope is configured to be releasably adjoined to the anchor body by magnetic attraction between the anchor body and the telescope.
2. The loupe device of item 1 wherein:
   one of the anchor body and the telescope includes at least one magnet and the other of the anchor body and the telescope includes at least one magnetic element; and
   the magnetic attraction includes magnetic interaction between the magnet and the magnetic element.
3. The loupe device of item 2 wherein the at least one magnet is disposed between the anchor body and an anchor cover.
4. The loupe device of item 3 wherein the cover is affixed to the anchor body by at least one fastener, thereby retaining the at least one magnet within at least one of a recess in the anchor body and a bore defined in the anchor cover.
5. The loupe device of item 1 wherein the lens is retained within the anchor body by a retaining ring.
6. The loupe device of item 2 wherein a shape of the at least one magnetic element includes a ring.
7. The loupe device of item 1, wherein the anchor body is a first anchor body and the telescope is a first telescope, the device further comprising:
   a second anchor body;
   a second telescope;
   a first carrier lens;
   a second carrier lens; and
   a binocular carrier lens frame,
   wherein:
   the second telescope is adjoined to the second anchor body by magnetic attraction between the second anchor body and the second telescope;
   the first anchor body is embedded within the first carrier lens;
   the second anchor body is embedded within the second carrier lens; and
   each of the first and second carrier lenses are attached to the carrier lens frame.
8. The loupe device of item 2 wherein:
   the anchor body includes a distal end configured to receive a proximal end of the telescope;
   a proximal end of the anchor body opposite the distal end includes an annular lip extending interiorly; and
   the lip defines a bay configured to accommodate the lens.
9. The loupe device of item 8 wherein:
   the bay is bordered distally by an inwardly extending annular bay rim defining a window; and
   the lens is disposed within the bay and abuts the bay rim.
10. The loupe device of item 8 wherein the anchor body includes at least one recess disposed peripheral to the bay, the recess configured to receive at least one magnet.
11. The loupe device of item 10 further comprising an anchor cover defining a central window therethrough.
12. The loupe device of item 11 further comprising a fastener configured to affix the anchor body to the cover, thereby retaining at least one magnet within at least one of the recess and a bore defined in the anchor cover, the bore disposed peripheral to the central window.
13. The loupe device of item 10 wherein the recess extends distally through the anchor body from the proximal end of the anchor body toward at least one distal rim of the recess, the rim at least partly occluding the recess.
14. The loupe device of item 13 wherein:
   the magnet has a cylindrical shape including a distal face configured to fit into the recess and to be retained by the rim of the recess;
   the telescope includes at least one magnetic element; and
   the magnetic attraction includes magnetic interaction between the magnet and the magnetic element.
15. The loupe device of item 9 further comprising a magnetic element affixed to the proximal end of the telescope, a proximal surface of the magnetic element disposed about even with the proximal end of the telescope.
16. The loupe device of item 15 wherein the anchor body defines a central hollow configured to receive the proximal end of the telescope, disposing the proximal surface of the magnetic element in abutment with a distal face of the at least one magnet.
17. A loupe device for magnifying an object, the device comprising:
   an anchor assembly including:
      an anchor body;
      at least one magnet;
      an anchor cover;
      at least one fastener affixing the anchor cover to the anchor body, thereby retaining the at least one magnet between the anchor cover and the anchor body;
      a corrective lens; and
      a corrective lens retaining ring; and
   an interchangeable telescope assembly, including:
      an interchangeable telescope; and
      at least one magnetic element,
   wherein the interchangeable telescope assembly is configured to adjoin to the anchor assembly by magnetic attraction between the at least one magnet and the at least one magnetic element.
18. The loupe device of item 17 wherein a shape of the at least one magnet is cylindrical.
19. A binocular loupe system providing a magnified field of view, the system comprising:
   a carrier lens frame including a pair of carrier lenses;
   a pair of anchor assemblies, one of the pair of anchor assemblies affixed to one of the pair of carrier lenses and an other of the pair of anchor assemblies affixed to an other of the pair of carrier lenses, each anchor assembly including:
      an anchor body;
      at least one cylindrical magnet;
      an anchor cover; and
      at least one fastener affixing the cover to the body, thereby retaining the at least one magnet between the cover and the body; and
   at least one pair of interchangeable telescope assemblies, each telescope assembly including an interchangeable telescope having at least one magnetic element;
   wherein each of the telescope assemblies is configured to adjoin to one of the pair of anchor assemblies by magnetic attraction between the at least one magnet and the at least one magnetic element.
20. The binocular loupe system of item 19 wherein the pair of anchor assemblies are affixed to the pair of carrier lenses such that, with adjoinment of one telescope assembly of the pair of telescope assemblies to one anchor assembly of the pair of anchor assemblies and adjoinment of the other telescope assembly of the pair of telescope assemblies to the other anchor assembly of the pair of anchor assemblies, the system is configured to provide a magnified binocular view of a visual field through the telescopes.
21. The binocular loupe system of item 19 wherein the cover includes a corrective lens and a retaining ring configured to retain the corrective lens in the anchor cover.
22. A method of manufacturing a loupe device, the method comprising:
   inserting at least one magnet into a loupe anchor body;
   aligning an anchor cover to the anchor body;
   affixing the anchor cover to the anchor body, thereby retaining the magnet between the anchor cover and the anchor body;
   fixedly mechanically associating a magnetic element with a magnification lens such that bringing the magnetic element into a proximity of the magnet effecting magnetic interaction between the magnet and the magnetic element, releasably mechanically associates the magnification lens with the anchor body.
23. The method of item 22 wherein the affixing includes inserting at least one fastener into the anchor body and the anchor cover.
24. The method of item 22 wherein the associating the magnetic element includes affixing the magnetic element to a telescope, the telescope including the magnification lens.
25. The method of item 22 wherein the associating the magnetic element includes manufacturing at least part of a telescope of a material with magnetic properties, the telescope including the magnification lens.
26. The method of item 22 further comprising:
   disposing a corrective lens within the anchor cover; and
   affixing a retaining ring to the anchor cover,
      thereby retaining the corrective lens within the anchor cover.

## Claims

1. A loupe device for magnifying an object, the device comprising:
an anchor body including a corrective lens; and
an interchangeable telescope;
wherein the telescope is configured to be releasably adjoined to the anchor body by magnetic attraction between the anchor body and the telescope.

2. The loupe device of claim 1 wherein:
one of the anchor body and the telescope includes at least one magnet and the other of the anchor body and the telescope includes at least one magnetic element; and
the magnetic attraction includes magnetic interaction between the magnet and the magnetic element.

3. The loupe device of claim 2 wherein an anchor cover is affixed to the anchor body by at least one fastener, thereby retaining the at least one magnet within at least one of a recess in the anchor body and a bore defined in the cover.

4. The loupe device of claim 1, wherein the anchor body is a first anchor body and the telescope is a first telescope, the device further comprising:
a second anchor body;
a second telescope;
a first carrier lens;
a second carrier lens; and
a binocular carrier lens frame,
wherein:
the second telescope is adjoined to the second anchor body by magnetic attraction between the second anchor body and the second telescope;
the first anchor body is embedded within the first carrier lens;
the second anchor body is embedded within the second carrier lens; and
each of the first and second carrier lenses are attached to the carrier lens frame.

5. The loupe device of claim 1 wherein:
the anchor body includes a distal end configured to receive a proximal end of the telescope;
a proximal end of the anchor body opposite the distal end includes an annular lip extending interiorly; and
the lip defines a bay configured to accommodate the lens.

6. The loupe device of claim 5 wherein the anchor body includes at least one recess disposed peripheral to the bay, the recess configured to receive at least one magnet.

7. The loupe device of claim 6 further comprising an anchor cover defining a central window therethrough.

8. The loupe device of claim 7 further comprising a fastener configured to affix the anchor body to the cover, thereby retaining at least one magnet within at least one of the recess and a bore defined in the cover, the bore disposed peripheral to the central window.

9. The loupe device of claim 6 wherein the recess extends distally through the anchor body from the proximal end of the anchor body toward at least one distal rim of the recess, the rim at least partly occluding the recess.

10. The loupe device of claim 9 wherein:
the magnet has a cylindrical shape including a distal face configured to fit into the recess and to be retained by the rim of the recess;
the telescope includes at least one magnetic element; and
the magnetic attraction includes magnetic interaction between the magnet and the magnetic element.

11. The loupe device of claim 6 further comprising a magnetic element affixed to the proximal end of the telescope, a proximal surface of the magnetic element disposed about even with the proximal end of the telescope.

12. The loupe device of claim 11 wherein the anchor body defines a central hollow configured to receive the proximal end of the telescope, disposing the proximal surface of the magnetic element in abutment with a distal face of the at least one magnet.

13. A method of manufacturing a loupe device, the method comprising:
inserting at least one magnet into a loupe anchor body;
aligning an anchor cover to the anchor body;
affixing the anchor cover to the anchor body, thereby retaining the magnet between the anchor cover and the anchor body;
fixedly mechanically associating a magnetic element with a magnification lens such that bringing the magnetic element into a proximity of the magnet effecting magnetic interaction between the magnet and the magnetic element, releasably mechanically associates the magnification lens with the anchor body.

14. The method of claim 13 wherein the associating the magnetic element includes affixing the magnetic element to a telescope, the telescope including the magnification lens.

15. The method of claim 13 wherein the associating the magnetic element includes manufacturing at least part of a telescope of a material with magnetic properties, the telescope including the magnification lens.
